# EUROPEAN PATENT APPLICATION

(11) **EP 4 600 025 A1**
(43) Date of publication of application: **13.08.2025**
(21) Application number: 24156295.8
(22) Date of filing: 07.02.2024
(51) Int. Cl.: B29C 65/48, B32B 37/12, C09J 7/10

(54) **METHOD AND SYSTEM FOR FORMING AN ADHESIVE STRUCTURE**

(71) Applicant: 3con Anlagebau GmbH, 6341 Ebbs (AT)
(72) Inventor: AUER, Hannes, 6341 Ebs (AT)
(74) Representative: Flach Bauer & Partner Patentanwälte mbB

(57) **Abstract**

The present invention relates to a method and a system 1 for forming an adhesive structure for a laminating process, the method including applying a reactive adhesive formula on a base, partial curing 1200 the applied reactive adhesive formula 10 to obtain an adhesive structure 100, and stripping the partially cured adhesive structure 100 from the base.

## Description

### Field of the invention

The invention relates to a method and to a system for forming an adhesive structure, wherein the adhesive structure is configured to be used for laminating, particularly for press laminating, heat laminating, vacuum laminating and/or the like.

### Background

Generally laminating denotes a method for combining multiple materials, including at least one layered material to create a single, unified structure.

Press laminating is a method used to join multiple layers of materials together under heat and/or pressure, or to laminate at least one layer on a base body. Press laminating is inter alia used for manufacturing car interiors, such as dashboards and/or other interior trim parts.

The press laminating method typically involves feeding material to be laminated into a tooling (or into respective tool halves). Subsequently the tooling is closed under application of heat and/or pressure. In case only heat is used, the method is also called heat laminating. The heat and the optional application of pressure activates an adhesive (e.g. a hot melt adhesive) on the laminating film, causing it to bond with the materials being laminated. After the materials have been laminated, they may be actively or passively cooled to set the adhesive and cool down the laminated product. Once cooled, the laminated product is typically cut to its final size and shape. However, there are also press laminating methods that do not require cutting, as the material layers were already precisely shaped beforehand.

Another well-known laminating method is vacuum laminating. Vacuum laminating involves using a vacuum to remove air and pressurize the materials to be laminated together. For vacuum laminating a vacuum press may be used to create a tightly bonded laminate. As in the press laminating method, the single materials are adhered together, using an adhesive, particularly a reactive adhesive.

Prior to laminating the adhesive(s) is/are directly applied onto at least one material to be laminated. Hence, the adhesive may be applied on one or on both materials to be laminated. The adhesives may for example be spray coated or roll coated.

Generally, reactive adhesives may be used for laminating, as they provide for an improved adhesion. Once applied, the materials to be laminated have to be joined within minutes to hours as otherwise the adhesive would cure. Reactive adhesives being used for laminating typically have a pot life of about 2h to 8h, in particular about 4h.

However, the direct application of the adhesive is oftentimes neither suited nor desired, as during application the materials to be laminated may be damaged, due to excess adhesive, due to adhesive being unintentionally applied on a surface that will be visible in a later product, due to adhesive being soaked into the materials, and/or the like.

### Summary

In view of the above, there is a need in the art to provide for a method and a system, allowing an improved handling of reactive adhesives, particularly in the field of laminating.

The object is achieved by a method according to claim 1 and by a system according to claim 12. Further aspects of the present invention are given in the dependent claims as well as in the following description.

In particular, the object is achieved by a method for forming an adhesive structure for a laminating process, such as press laminating, heat laminating, vacuum laminating, and/or the like.

The method includes
- applying a reactive adhesive formula on a base,
- partial curing the applied reactive adhesive formula to obtain an adhesive structure, and
- stripping the partially cured adhesive structure from the base.

After the partial curing step, the applied reactive adhesive formula may be substantially tack-free, however, the applied reactive adhesive formula is not entirely cured and still suited for laminating. The substantially tack-free surface may form due to skinning. I.e. a thin dried film may form on the surface of the applied reactive adhesive formula. This film may form due to cooling (e.g. in case of a hot melt adhesive), due to evaporation of a solvent and/or water (e.g. in case of solvent based or dispersion adhesive), due to chemical reactions (e.g. due to an exposure to air, oxygen, and/or a source of radiation), and/or the like

The reactive adhesive formula may be applied with a mass of about 20 g/m² to 200 g/m², or with a mass of about 40 g/m² to 150 g/m², or with a mass of about 60 g/m² to 100 g/m².

The partially cured adhesive structure may include, or consist of the reactive adhesive formula. Further, filler and/or reinforcement elements may be included in the partially cured adhesive structure, such as particles or fibers. A particle size and/or a fiber diameter may determine the thickness of the partially cured adhesive structure and/or the thickness of an adhesive layer in a final laminated product. The filler and/or reinforcement elements may be applied together with the reactive adhesive formula, or separately, e.g. after the reactive adhesive formula has been applied on the base, and prior to, or during partial curing.

The above method allows to provide reactive adhesive (which may have a short pot life of less than 8 hours, or less than 6 hours, or less than 4 hours, or less than 2 hours or even less than one hour) in a film like form. Hence, the film like adhesive structure can be handled in the laminating method as other material layers (e.g. using the same techniques and tooling as for positioning a trim). This allows an exact positioning of the adhesive structure and minimizes the risk damaging the materials to be laminated e.g. due to excess adhesive, due to adhesive being unintentionally applied on a surface that will be visible in a later product, due to adhesive being soaked into the materials, and/or the like. Even further, no additional adhesive spraying apparatus or adhesive rollers are required.

The reactive adhesive formula may include any reactive adhesive that can be partially cured and optionally provides for skinning. For example, the reactive adhesive formula may include a reactive hot melt adhesive, a reactive dispersion based adhesive, a reactive solvent based adhesive, and/or the like. In particular, the reactive adhesive formula may be, or include at least one of the following:
- a PUR (polyurethane) reactive adhesive;
- an APAO (amorphous poly alpha olefin) reactive adhesive;
- an EVA (ethylene vinyl acetate) reactive adhesive;
- a PO (polyolefin) reactive adhesive;
- a PA (polyamide) reactive adhesive;
- a metallocene reactive adhesive;
- a SBC (styrenic block copolymer) reactive adhesive;
- a PSA (pressure-sensitive adhesive) reactive adhesive;
- a radiation curing reactive adhesive, particularly a UV-curing reactive adhesive;
- a (water based) dispersion reactive adhesive, , and/or
- a solvent based reactive adhesive.

The afore mentioned reactive adhesives, may be hot melt adhesives, dispersion based adhesives, solvent based adhesives, and/or the like.

For example, polyurethane-based hot melts are versatile and offer excellent adhesion to various substrates and can be flexible or rigid, depending on the formulation. Polyolefin-based and polyamide-based hot melts provide for good temperature resistance. Metallocene-based hot melts offer a balance of adhesion, flexibility, and heat resistance. Styrenic block copolymer hot melts allow for excellent adhesion to low-energy surfaces such as plastics.

After being applied and partially cured, the partially cured adhesive structure including or consisting of the reactive adhesive formula can be stripped from the base and directly used for further processing (e.g. press laminating). Depending on the reactive adhesive formula further processing has to take place within minutes (at most hours) after forming the partially cured adhesive structure.

After the partial curing step, the partially cured adhesive structure has sufficient strength to be stripped of the base. In a particular aspect, the partially cured adhesive structure is tack-free. Thus, for further processing the partially cured adhesive structure can be handled as an adhesive film or even as a film. However, as the further processing is done subsequently to the stripping step, no separator film and/or the like are required.

Further, to facilitate the stripping and to avoid damaging the adhesive structure during stripping, the base may at least partially be coated with a releasing agent, e.g. silicone-based, mineral oil-based, vegetable-oil based, wax-based, PVA-based, and/or the like.

The reactive adhesive formula and/or the releasing agent may be applied by means of roll coating, spray coating, stamp coating, curtain coating or dip coating. It is to be understood, that the reactive adhesive formula and the releasing agent may be applied by the same application technique or by different application techniques. For example, the reactive adhesive formula may be roll coating by at least one roller. In case of a hot melt, the roller and/or the base may be heated. The releasing agent (if required) may also be applied by a roller (the same or a different one), or may e.g. be sprayed. In another aspect, the base may (at least partially) be dipped into a releasing agent or may be guided through a releasing agent curtain prior to the application of the reactive adhesive formula.

The partial curing may include at least one of:
- irradiating the applied reactive adhesive formula (e.g. with UV radiation, electron beam radiation, and/or the like),
- heating the applied reactive adhesive formula (e.g. for evaporating a solvent or a dispersant),
- cooling the applied reactive adhesive formula (e.g. for letting a hot melt adhesive set);
- letting set the applied reactive adhesive formula (e.g. by passively cooling a hot melt adhesive and/or letting a solvent or a dispersant evaporate), and/or
- drying the applied reactive adhesive formula (e.g. by venting).

After the partial curing, the partially cured adhesive structure can be stripped off the base. Stripping may be performed manually or automatically. For an automated stripping a manipulator, such as industrial robot, may be used.

According to an aspect, the method includes masking the base, so as to apply the reactive adhesive formula on the base in a predefined shape, wherein the predefined shape corresponds to the mask. In a particular aspect, the mask includes shaped though openings, letting the reactive adhesive formula pass, so that the reactive adhesive formula can reach the base. After removing the mask, the reactive adhesive formula and accordingly the partially cured adhesive structure is shaped as desired. The mask may be removed prior to, during or after partial curing. Removing the mask may be performed manually or automatically.

The pre-defined shape may correspond to a shape of a trim (e.g. for laminating a car's dashboard) that shall be laminated to a further material sheet or a base body. It is to be understood, that the trim and the partially cured adhesive structure can have different shapes. For example, the partially cured adhesive structure may be smaller in size, taking into account that the partially cured adhesive structure may deform differently than the trim during lamination.

Further, the reactive adhesive formula may be applied on the base in a predefined shape. This can e.g. be achieved by spray coating or stamp coating. In a particular aspect a reactive adhesive formula applicator may be arranged movable relative to the base (i.e. the reactive adhesive formula applicator and/or the base may be movable). Further, excess reactive adhesive formula that was applied on the base can be removed prior to partial curing (e.g. scraped off), in order to obtain the desired predefined shape.

In a further aspect, a breaking point or line may be formed in the applied reactive adhesive formula (prior to or after partial curing), so that the partially cured adhesive structure can be stripped off, having a predefined shape. In other words, the partially cured adhesive structure is detached along the predetermined breaking line when it is stripped off.

Further, the method may include shaping the partially cured adhesive structure. The shaping step may be done prior to stripping or after stripping the partially cured adhesive structure. The shaping includes at least one of cutting the partially cured adhesive structure, embossing the partially cured adhesive structure, punching the partially cured adhesive structure, bending the partially cured adhesive structure, folding the partially cured adhesive structure, stretching the partially cured adhesive structure and/or the like. Thus, the desired predefined shape can be obtained.

The desired predefined shape is not limited to substantially flat, two dimensional shapes but may include three-dimensional shapes. For example, even if applied on a substantially flat base, the partially cured adhesive structure may be three dimensionally shaped, e.g. by embossing, bending, folding, stretching and/or the like. Thus, the partially cured adhesive structure can be formed so as to fit a three-dimensional base body, e.g. a base body of a car interior part, such as a dashboard.

Even further, the base may include a 3D-contourded shape to provide for a three-dimensional partially cured adhesive structure. The reactive adhesive formula may be applied on the 3D-contourded base and may be partially cured. After stripping, the partially cured adhesive structure may have a 3D-shape, corresponding to the 3D-contourded shape of the base.

Still further, the base may include a cutting edge and/or cutting face for shaping the partially cured adhesive structure, e.g. by embossing or punching. For example, a cutting edge can be arranged extendible, in order to cut the partially cured adhesive structure to the descried shape on the base.

Further, the base may have a release surface, wherein the release surface may include at least one of silicon, glass, ceramics, polytetrafluoroethylene and/or diamond-like-carbon. This release surface facilitates stripping off the partially cured adhesive structure.

After having formed the partially cured adhesive structure as described above, the partially cured adhesive structure may be further processed, e.g. in a lamination method, such as a press lamination method, a heat lamination method, a vacuum lamination method, and/or the like.

The lamination method includes the following:
- providing at least one partially cured adhesive structure, wherein the partially cured adhesive structure is formed as described above;
- applying the partially cured adhesive structure on a trim or on a base body;
- inserting the partially cured adhesive structure, the trim and/or the base body in a lamination tooling (e.g. a press, a vacuum press, a heated press, rollers, and/or the like);
- optionally heating the inserted, partially cured adhesive structure, the trim and/or the base body, and
- laminating, particularly press laminating, the trim on the base body, wherein the partially cured adhesive structure is sandwiched between the trim and the base body and wherein the partially cured adhesive structure is further cured during the laminating.

The step of applying the partially cured adhesive structure on a trim or on a base body can be performed in the tooling or outside the tooling. When performed outside the tooling, the partially cured adhesive structure and the trim, or the partially cured adhesive structure and the base body, or the partially cured adhesive structure and the trim and the body are inserted commonly in the tooling.

The tooling may include a first tool half, a second tool half and/or a support frame, wherein the first tool half, the second tool half and/or the support frame may be arranged movable. The base body may be inserted in one of the tool halves. The trim may be inserted in the first tool half, the second tool half and/or the support frame. The partially cured adhesive structure may be inserted in the first tool half, the second tool half and/or a support frame. The support frame may be the same or a different one, as the one receiving the trim. The partially cured adhesive structure, the trim and the base body are arranged so that the partially cured adhesive structure is sandwiched between the trim and the base body.

After being inserted but prior to the actual laminating step, the partially cured adhesive structure 100, the trim 200 and/or the base body 300 may be heated to a desired temperature and/or for a predetermined amount of time. The heating may be achieved by a heating device, such as an infrared heating device, a flame heating device, a hot-air flow heating device, an induction heating device and/or the like.

In the subsequent laminating step, the tooling is closed and heat and/or pressure and/or vacuum is applied. Thereby, the partially cured adhesive structure that is sandwiched between the trim and the base body will be further cured and the trim is adhered to the base body by means of the adhesive structure.

It is to be understood, that the final adhesive strength may be achieved during or after the laminating, depending on the reactive adhesive formula used. For example, the final adhesive strength may be achieved after the laminated product (i.e. the trim being adhered to the base body) has been cooled and/or after all reactive components have reacted.

In a further aspect, the partially cured adhesive structure may be foamed or may foam during laminating. Thus, the laminated product may have a soft and pleasant haptic, as there is a foam layer between the trim and the base body, resulting from the partially cured adhesive structure.

The base body may be an injection molded part, wherein the trim may be a decorative film, a leather imitation, a textile, a fabric, a non-woven, a foam, a leather, a microfiber and/or the like.

It is to be understood, that multiple trims can be laminated on a base body, side by side or in a stacked manner. Likewise, multiple partially cured adhesive structures can be used.

The object is further achieved by a system for forming an adhesive structure for a laminating method. The system is configured to carry out the above method. Particularly, the system comprises
- at least one base, the base including a release surface for receiving a reactive adhesive formula;
- a reactive adhesive formula applicator (e.g. a roll coater, a spray coater, a stamp coater, a curtain coater or a dip coater), the reactive adhesive formula applicator being configured to apply the reactive adhesive formula on the base;
- a partial curing device (e.g. including an irradiator, a heater, a cooler, a fan and/or the like), the partial curing device being configured to partially cure the applied reactive adhesive formula to obtain an adhesive structure, and
- optionally a stripping device (e.g. a manipulator), the stripping device being configured to strip the partially cured adhesive structure from the base.

The system may further comprise a releasing agent applicator (e.g. a roll coater, a spray coater, a stamp coater, a curtain coater or a dip coater), the releasing agent applicator being configured to apply a releasing agent on the base.

Even further, the system may comprise a shaping device (such as a blade, a cutting die, a laser, ...). The shaping device may be adapted to shape the partially cured adhesive structure by cutting, embossing, punching, bending, folding and/or stretching.

Further, the base may comprise a 3D-contourded shape to provide for a three-dimensional partially cured adhesive structure and/or a cutting edge and/or cutting face for shaping the partially cured adhesive structure on the base.

### Brief description of the figures

The present disclosure will be more readily appreciated by reference to the following detailed description when being considered in connection with the accompanying drawings in which:
- Fig. 1: schematically shows a reactive adhesive formula applicator;
- Fig. 2A-C: schematically show a reactive adhesive formula applied on a base;
- Fig. 3: schematically show a partially cured adhesive structure with a cutting line;
- Fig. 4: schematically shows a cut and stripped off partially cured adhesive structure;
- Fig. 5: schematically shows a partially cured adhesive structure being applied on a trim;
- Fig. 6: schematically shows a lamination tooling;
- Fig. 7: schematically shows a laminated product;
- Fig. 8: schematically shows a further reactive adhesive formula applicator, and
- Fig. 9: schematically shows a flow diagram of a method.

### Detailed description of the figures

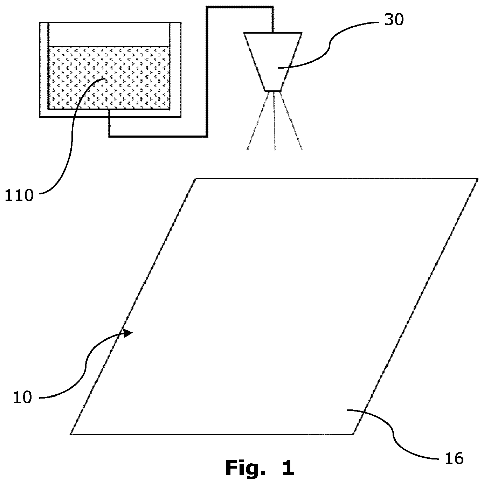

Fig. 1 schematically shows a reactive adhesive formula applicator 30 of a system for forming an adhesive structure. The reactive adhesive formula applicator 30 is configured to apply a reactive adhesive formula 110 on a base 10. The reactive adhesive formula may be stored in a tank and may be applied by spray coating. However, it is to be understood, that spray coating is only exemplarily shown and that the application may be done by any other suitable applicator, e.g. a roll coater, a spray coater, a stamp coater, a curtain coater or a dip coater.

The reactive adhesive formula may be a reactive hot melt adhesive, a reactive dispersion-based adhesive, a reactive solvent-based adhesive, and/or the like.

The base 10 may be substantially flat and may include a release surface 16. The release surface may be made of or may be coated with at least one of silicon, glass, ceramics, polytetrafluoroethylene and/or diamond-like-carbon. Prior to applying the reactive adhesive formula, the base, particularly the release surface 16, may (at least partially) be coated with a releasing agent, such as a silicone oil, mineral oil or vegetable oil.

Further, for applying the releasing agent and/or the reactive adhesive formula, the base may be moved relative to the applicator and/or the applicator may be moved relative to the base.

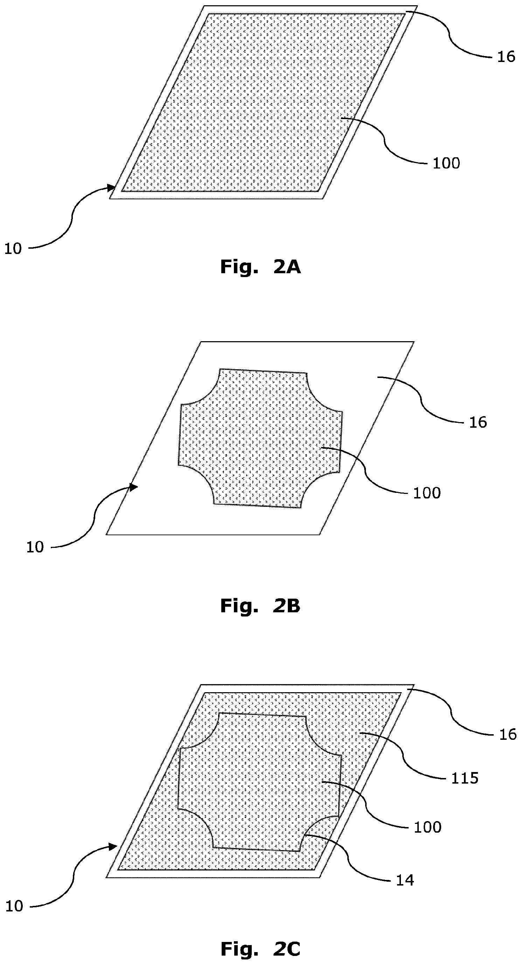

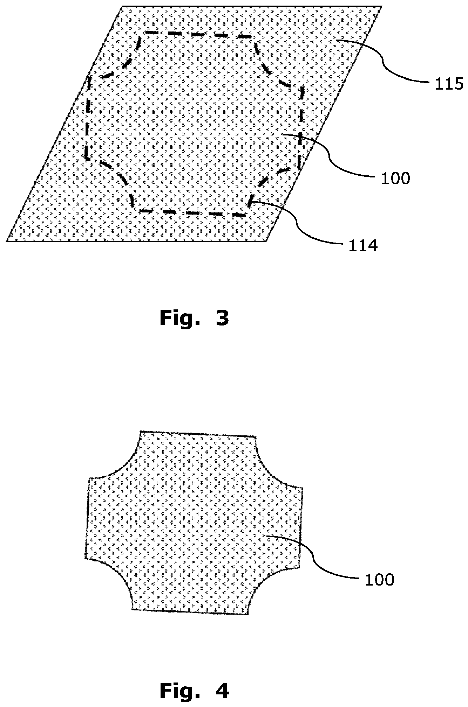

Figs. 2A, 2B and 2C each show a base 10, where a reactive adhesive formula 110 was applied to form an adhesive structure 100. In Fig. 2A, the reactive adhesive formula is essentially applied over the entire surface of the base. For achieving its final desired shape, the adhesive structure 100 is typically cut (as shown in Fig. 3).

In Fig. 2B, the reactive adhesive formula 110 was applied in a predefined and desired shape (here cross-like). It is to be understood, that the predefined shape is not limited in its design and may have different inner and outer contours, such as openings and/or through holes. The shape shown in Fig. 2B can be achieved by masking the base and or by a directly shaped application of the reactive adhesive formula.

In Fig. 2C, the base 10 includes a cutting edge 14 that can be moved relative to the release surface 16. For example, in a first position, the cutting edge 14 is retracted and does not protrude. In this first position, the reactive adhesive formula 110 is applied (e.g. by a roll coater). After applying and optionally partial curing the reactive adhesive formula, the cutting edge 14 can be moved in a second position. In this second position, the cutting edge 14 extends from the release surface 16. During the movement from the first to the second position, the cutting edge 14 can cut the pre-defined shape, which can be stripped off. The excess adhesive material 115 may remain on the base and can be stripped off in a further stripping-step.

In Fig. 3, a partially cured adhesive structure 100 is shown, which has been stripped off the base. For shaping the partially cured adhesive structure 100 to a desired, pre-defined shape, the partially cured adhesive structure 100 may be cut along the cutting line 114. Cutting can be blade-based or by means of a laser, a water jet, and/or the like. Further, the partially cured adhesive structure 100 may be shaped by embossing, punching, bending, folding, stretching, and/or the like. Thus, an initially two-dimensional partially cured adhesive structure 100 may be shaped to have a three-dimensional structure. Further, by shaping the partially cured adhesive structure 100, it is possible to avoid further cutting after adhering, i.e. using the partially cured adhesive structure, and/or to avoid an undesired adhesive leakage.

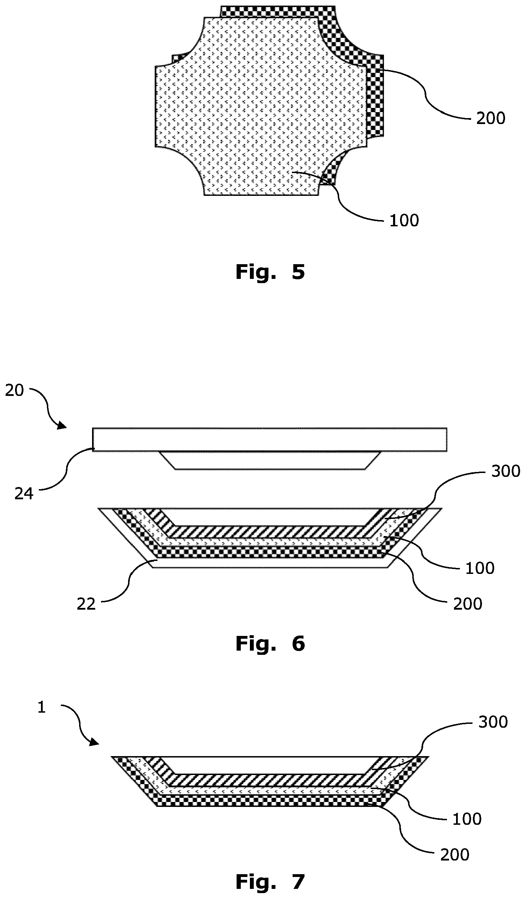

After shaping, the partially cured adhesive structure 100 may be shaped as shown in Fig. 4. As further shown in Fig. 5, the shaped partially cured adhesive structure 100 may be applied on a trim 200, e.g. a decorative film, a leather imitation, a textile, a fabric, a non-woven, a foam, a leather, a microfiber and/or the like. The trim 200 and the partially cured adhesive structure 100 may then be inserted in a lamination tooling, particularly a press lamination tolling, which may include at least one form half 22, 24 and/or a support frame.

A schematic lamination tooling 20, e.g. a lamination tooling, is shown in Fig. 6. The lamination tooling 20 includes a first form half 22 and a second form half 24. The first form half 22 may be fixedly arranged, while the second form half 24 may be arranged movably relative to the first form half 22, so as to open/close the tooling 20.

For obtaining a car's interior element, such as a dash board, the trim 200 and the partially cured adhesive structure 100 may be inserted in the first tool half 22, so that the partially cured adhesive structure 100 faces up-wards. The trim 200 and the partially cured adhesive structure 100 may be inserted together or one after another. A base body 300, e.g. an injection molded part, may be inserted in the second tool half 24 or on top of the partially cured adhesive structure 100.

After being inserted but prior to the actual laminating step, the partially cured adhesive structure 100, the trim 200 and/or the base body 300 may be heated to a desired temperature and/or for a predetermined amount of time. The heating may be achieved by a heating device (not shown). The heating device may be arranged stationary or movable. For example, the heating device may be configured to be moved between the first and second tool halves 22, 24 prior to closing the tooling 20. The heating device may be an infrared heating device providing IR-radiation, a flame heating device, a hot-air flow heating device, an induction heating device and/or the like.

The partially cured adhesive structure 100 (in particularly in case of a hot-melt adhesive being used for t the partially cured adhesive structure 100) may be softened again by this additional heating step, prior to being cured in the subsequent lamination step. By softening the partially cured adhesive structure 100, the adaption of the partially cured adhesive structure 10 to the trim and/or the base body is improved. This is in particular true for complex 3D-shapes.

It is to be understood, that the sequence of inserting the partially cured adhesive structure 100, the trim 200 and/or the base body 300 into the tooling can be varied, as long as in the end the partially cured adhesive structure 100 is sandwiched between the trim 200 and the base body, as the trim shall be adhered to the base body by means of the partially cured adhesive structure 100.

Further, the base body 300 may be inserted in one of the tool halves 22, 24. The trim may be inserted in the first tool half 22, the second tool half 24 and/or a clamping frame. The partially cured adhesive structure 100 may be inserted in the first tool half 22, the second tool half 24 and/or a support frame. The support frame may be the same or a different one, as the one receiving the trim 200.

In the subsequent laminating step, the tooling 20 is closed and heat and/or pressure is applied. Thereby, the partially cured adhesive structure 100 that is sandwiched between the trim 200 and the base body 300 will be further cured and the trim 200 is adhered to the base body 300 by means of the adhesive structure 100, resulting in the laminated product 1 shown in Fig. 7.

After laminating, the laminated product 1 may be cut to its final shape by removing excess adhesive and/or excess trim material. In a particularly preferred aspect, the trim and the partially cured adhesive structure are shaped prior to laminating, so that no cutting of the laminated product 1 is required.

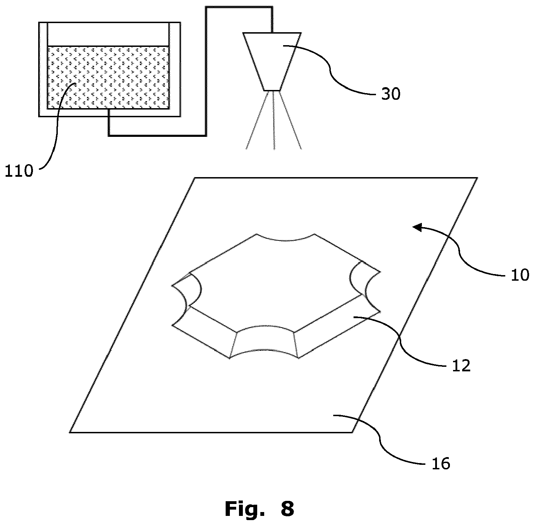

Fig. 8 schematically shows a further reactive adhesive formula applicator 30 for a system for forming an adhesive structure 100. According to this aspect, the base 10 has a 3D-contourded shape 12. This 3D-contourded shape 12 is molded by the applied reactive adhesive formula, such that a three-dimensional partially cured adhesive structure 100 is formed. After stripping, the partially cured adhesive structure 100 has a 3D-shape, substantially corresponding to the 3D-contourded shape 12 of the base 10.

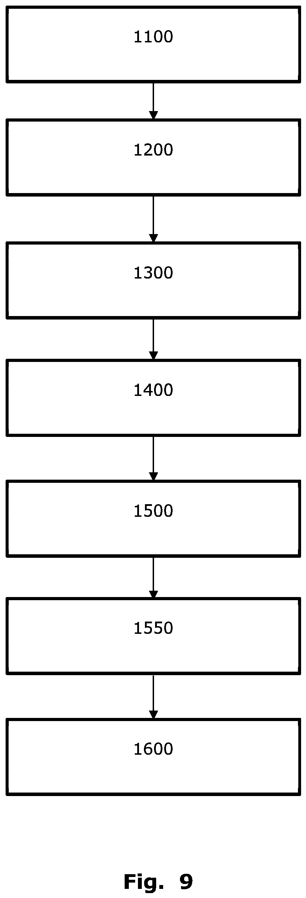

Fig. 9 schematically shows a flow diagram of a method 1000. The method comprises the steps of 1100 applying the reactive adhesive formula 110 on the base. This can be done, using different application techniques, such as roll coating, spray coating, stamp coating, curtain coating, dip coating, or the like. After having applied the reactive adhesive formula 110, the reactive adhesive formula is procured (step 1200). The partial curing may include irradiating the applied reactive adhesive formula (e.g. using UV-radiation), heating the applied reactive adhesive formula (e.g. for evaporating a solvent and/or a dispersant), cooling the applied reactive adhesive formula (e.g. for letting a hot melt adhesive set) and/or waiting in order to letting set the applied reactive adhesive formula.

In step 1300, the partially cured adhesive structure is shaped. The shaping can be done after the partial curing step 1200 and/or prior to the partial curing step 1200. If done prior to the partial curing step 1200 excess reactive adhesive material may be scraped from the base, or the base may be masked.

After the partial curing, the partially cured adhesive structure is stripped 1400 from the base. It is to be understood, that the stripping 1400 can be done prior or after the partial curing step 1300.

In step 1500, the partially cured adhesive structure is applied on a trim. This may be done in a laminating tooling or prior to inserting the trim and/or the partially cured adhesive structure into a laminating tooling. Further, a base body may be inserted into the tooling. The partially cured adhesive structure, the trim and the base body may be inserted such that the partially cured adhesive structure is sandwiched between the trim and the base body in a final laminated product.

After being inserted, but prior to the actual lamination step 1600, the inserted, partially cured adhesive structure 100, the trim 200 and/or the base body may be heated to a desired temperature and/or for a predetermined amount of time.

In step 1600, the trim, the partially cured adhesive structure and the base body are laminated, e.g. press laminated, heat laminated, vacuum laminated, and/or the like, to form a laminated product.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

### List of reference signs

- 1: laminated product
- 10: base
- 12: 3D-contourded shape
- 14: cutting edge
- 16: release surface
- 20: press lamination tooling
- 22: tool half (e.g. fixed)
- 24: tool half (e.g. moving)
- 30: reactive adhesive formula applicator
- 100: adhesive structure
- 110: reactive adhesive formula
- 114: cutting line
- 115: excess adhesive material
- 200: trim
- 300: base body
- 1000: method for forming an adhesive structure
- 1100: applying the reactive adhesive formula
- 1200: partial curing the reactive adhesive formula
- 1300: shaping the partially cured adhesive structure
- 1400: stripping the partially cured adhesive structure
- 1500: applying partially cured adhesive structure on a trim
- 1550: heating
- 1600: press laminating

## Claims

1. A method (1000) for forming an adhesive structure (100) for a laminating process, the method including
applying (1100) a reactive adhesive formula (110) on a base (10);
partial curing (1200) the applied reactive adhesive formula (10) to obtain an adhesive structure (100), and
stripping (1400) the partially cured adhesive structure (100) from the base (10).

2. The method (1000) according to claim 1, further comprising
shaping (1300) the partially cured adhesive structure (100), wherein shaping includes at least one of cutting, embossing, punching, bending, folding, stretching.

3. The method (1000) according to claim 1 or claim 2, wherein prior to applying (1100) the reactive adhesive formula (110) on the base (10), the base (10) is at least partially coated with a releasing agent.

4. The method (1000) according to any one of claims 1 to 3, wherein the reactive adhesive formula (110) and/or the releasing agent is applied by means of roll coating, spray coating, stamp coating, curtain coating or dip coating.

5. The method (1000) according to any one of claims 1 to 4, further comprising
masking the base (10), so as to apply the reactive adhesive formula (110) on the base (10) in a predefined shape, corresponding to the mask, and/or wherein
the reactive adhesive formula (110) is applied on the base (10) in a predefined shape.

6. The method (1000) according to any one of claims 1 to 5, wherein the partial curing (1200) includes at least one of:
irradiating the applied reactive adhesive formula (110),
heating the applied reactive adhesive formula (110),
cooling the applied reactive adhesive formula (110),
letting set the applied reactive adhesive formula (110), and/or
drying the applied reactive adhesive formula (110).

7. The method (1000) according to any one of claims 1 to 6, wherein the reactive adhesive formula (110) includes at least one of a reactive hot melt adhesive, a reactive dispersion based adhesive and/or a reactive solvent based adhesive.

8. The method (1000) according to any one of claims 1 to 7, wherein the base (10) comprises
a 3D-contourded shape (12) to provide for a three-dimensional partially cured adhesive structure (100), and/or
a cutting edge (14) and/or cutting face for shaping (1300) the partially cured adhesive structure (100).

9. The method (1000) according to any one of claims 1 to 8, wherein the base (10) has a release surface (16), the release surface (16) including at least one of silicon, glass, ceramics, polytetrafluoroethylene and/or diamond-like-carbon.

10. A lamination method, the lamination method including
providing a partially cured adhesive structure (100), obtained by the method (1000) according to any one of claims 1 to 9;
applying (1500) the partially cured adhesive structure (100) on a trim (200) or on a base body (300);
inserting the partially cured adhesive structure (100), the trim (200) and/or the base body in a lamination tooling (20);
optionally heating (1550) the inserted, partially cured adhesive structure (100), the trim (200) and/or the base body,
and laminating, particularly press laminating, (1600) the trim (200) on the base body (300), wherein the partially cured adhesive structure (100) is sandwiched between the trim (200) and the base body (300) and wherein the partially cured adhesive structure is further cured during the laminating.

11. The lamination method according to claim 10, wherein at least one of the trim (200) and/or the partially cured adhesive structure (100) is held by a support frame during the laminating (1600).

12. A system for forming an adhesive structure (100) to be used in a lamination method, the system comprising
at least one base (10), the base including a release surface (16) for receiving a reactive adhesive formula (10);
a reactive adhesive formula applicator (30), the reactive adhesive formula applicator (30) being configured to apply the reactive adhesive formula (110) on the base (10);
a partial curing device, the partial curing device being configured to partially cure the applied reactive adhesive formula (10) to obtain an adhesive structure (100), and
optionally a stripping device, the stripping device being configured to strip the partially cured adhesive structure (100) from the base (12).

13. The system according to claim 12, the system further comprising
a releasing agent applicator, the releasing agent applicator being configured to apply a releasing agent on the base (10).

14. The system according to claim 12 or 13, the system further comprising
a shaping device, the shaping device being adapted to shape the partially cured adhesive structure (100) by cutting, embossing, punching, bending, folding and/or stretching.

15. The system according to any one of claim 12 to 14, wherein the base (10) comprises
a 3D-contourded shape (12) to provide for a three-dimensional partially cured adhesive structure (100), and/or
a cutting edge (14) and/or cutting face for shaping (1300) the partially cured adhesive structure (100).
